Europäisches Patentamt

European Patent Office

Office européen des brevets

(19)

(11) Numéro de publication: **0 217 682**
**B1**

## FASCICULE DE BREVET EUROPEEN

(12)

(45) Date de publication du fascicule du brevet:
**13.09.89**

(51) Int. Cl.⁴: **B01D 53/18, C02F 3/10**

(21) Numéro de dépôt: **86401572.2**

(22) Date de dépôt: **15.07.86**

(54) Dispositif de garnissage pour installation de traitement biologique des eaux résiduaires.

(30) Priorité: **05.08.85 FR 8511956**

(43) Date de publication de la demande:
**08.04.87 Bulletin 87/15**

(45) Mention de la délivrance du brevet:
**13.09.89 Bulletin 89/37**

(84) Etats contractants désignés:
**AT BE CH DE FR GB IT LI LU NL SE**

(56) Documents cités:
**DE-B- 2 219 130**
**FR-A- 2 263 808**
**GB-A- 2 035 284**

(73) Titulaire: **HAMON-SOBELCO S.A., 50-58, Rue Capouillet, B-1060 Bruxelles(BE)**

(72) Inventeur: **Bosne, George Jacques Eugène, 5, rue des Sables, F-78220 Viroflay(FR)**

(74) Mandataire: **Bressand, Georges et al, c/o CABINET LAVOIX 2 Place d'Estienne d'Orves, F-75441 Paris Cédex 09(FR)**

EP 0 217 682 B1

ACTORUM AG

## Description

La présente invention concerne un dispositif de garnissage , notamment pour une installation de traitement biologique des eaux résiduaires.

Le traitement biologique aérobie des eaux résiduaires consiste à provoquer le développement de bactéries qui, par action physico-chimique, retiennent la pollution organique et s'en nourrissent. Pour le traitement biologique des effluents urbains et industriels, on utilise en particulier des dispositifs de garnissage formant des surfaces de ruissellement statiques sur lesquelles on vient répartir le mieux possible les eaux à traiter.

Les eaux ruissellent sur des surfaces qui servent de support aux microorganismes épurateurs. Une aération apporte l'oxygène nécessaire. Il y a dégradation de la matière nutritive constituée par la pollution organique des effluents. Cette dégradation correspond chimiquement à une déshydrogénation appelée aérobiose ou anaérobiose selon que l'hydrogène se fixe sur l'oxygène moléculaire en surface ou sur un autre accepteur en profondeur, quand le film biologique est suffisamment épais.

La relation mathématique qui rend compte de l'élimination de la DBO (demande biologique en oxygène) d'une eau résiduaire sur un lit bactérien, s'écrit sous la forme :

$$\frac{Lf}{Lo} = e^{- K_t S_s^m H Q^{-n}}$$

où :

Lf = DBO de l'eau clarifiée
Lo = DBO de l'eau d'alimentation
Kt = coefficient dépendant de la température et de la nature du matériau
Ss = surface spécifique du matériau (m2/m3)
H = hauteur de ruissellement (m)
Q = débit spécifique
n = constante
m = exposant < 1 déterminé expérimentalement

Des dispositifs de garnissage en matière plastique pour des installations de traitement biologique des eaux résiduaires existent déjà, mais ils offrent divers inconvénients :

- Certains sont constitués de profilés tubulaires multicanaux et doivent être transportés sur le site tels qu'ils seront mis en place, ce qui représente un volume important par rapport à la surface active. Le transport est donc un élément très important du prix de revient, qui devient ainsi prohibitif pour les grandes distances, l'exportation en particulier.

- La faible section de ces profilés multicanaux rend obligatoire leur groupage dans des casiers à claire-voie qui, devant rester en place lors de l'utilisation, sont obligatoirement en métal résistant aux milieux agressifs que l'on rencontre dans les effluents, donc de prix élevé.

- D'autres dispositifs sont constitués d'éléments de faible hauteur, ces éléments étant empilés, les uns sur les autres. Ces éléments sont constitués notamment par des assemblages de feuilles ondulées séparées par des feuilles planes définissant entre elles des canaux. Mais les canaux d'un élément ne se trouvent pas dans la plupart des cas en face des canaux des éléments inférieur et supérieur. Le risque de colmatage est donc important et le débouchage impossible sans démontage et remontage très onéreux.

- Pour certains dispositifs, les canaux qui se trouvent en face des poutres ou éléments de support se trouvent obligatoirement obstrués. Toute la surface de ces canaux devient alors inactive du haut en bas.

On connait d'autre part par le document DE-B 2 219 130 un dispositif de garnissage pour échangeurs composé d'un empilement de plaques ondulées à ondulations croisées d'une plaque à l'autre dans lequel les crêtes des ondulations présentent des crénelures.

La présente invention vise à fournir un dispositif de garnissage ne présentant pas les inconvénients de la technique antérieure.

A cet effet la présente invention a pour objet un dispositif de garnissage pour installation de traitement biologique des eaux résiduaires, du type comprenant un assemblage de feuilles (1) présentant des ondulations et séparées par des feuilles planes (2), lesdites feuilles (1) présentant des ondulation définissant avec les feuilles planes (2) des canaux (7, 8) rectilignes parallèles de ruissellement des eaux résiduaires, caractérisé en ce que les crêtes des ondulations présentent des crénelures (9) délimitant avec la feuille plane (2) adjacente des passages faisant communiquer deux canaux (7, 7 ou 8, 8) disposés d'un même côté d'une feuille ondulée (1), et les crénelures (9) des crêtes de deux ondulations adjacentes sont décalées l'une par rapport à l'autre suivant la direction des ondulations, le décolage étant tel que, dans la direction perpendiculaire aux ondulations, les crénelures et les parties non crénelées de chaque crête font face respectivement aux parties non crenelées et aux crénelures des crêtes des onduclations immédiatement adjacentes.

Les feuilles ondulées peuvent présenter des ondulations de diverses formes. Toutefois les ondulations à profil trapézoïdal sont préférées.

De même le profil des crénelures est de préférence trapézoïdal.

Le dispositif selon l'invention peut reposer de manière connue sur des supports horizontaux comportant des croisillons. Pour réduire encore au minimum les risques de bouchage les feuilles planes de séparation peuvent ne pas exister dans la partie inférieure du dispositif, par exemple sur quelques centimètres.

Les feuilles constituant le dispositif selon la présente invention peuvent être notamment des feuilles de matière plastique rigide, par exemple de chlorure de polyvinyle. Les feuilles présentant des ondulations peuvent être obtenues par thermoformage de feuilles planes.

Pour réaliser le dispositif les feuilles peuvent être assemblées par soudure ou par collage.

Toutes les feuilles ondulées ou planes utilisées peuvent comporter en outre des ondulations supplémentaires ou gaufrages de faibles dimensions, pour augmenter des surfaces de contact avec les eaux résiduaires et/ou des perforations pour améliorer les échanges liquide-gaz.

L'invention est exposée ci-après plus en détail à l'aide d'un dessin représentant seulement un mode d'exécution.

Sur ce dessin la Fig. unique est une vue en perspective d'une partie d'un dispositif selon l'invention.

Le dispositif représente sur la Fig. unique comprend un ensemble de feuilles 1 présentant des ondulations qui sont séparées par des feuilles planes 2. Chaque feuille réalisée en matière plastique peut, par exemple, avoir une largeur de 1 m et une longueur de plusieurs mètres. Ces feuilles sont assemblées, par exemple par collage de façon à constituer des éléments ayant une épaisseur d'un mètre par exemple.

Les feuilles 1 présentant des ondulations ont dans un plan orthogonal à la crête de ces ondulations un profil général de forme trapézoïdale.

Chaque ondulation comprend un premier côté plat 3, un côté plat incliné 4 faisant un angle obtus avec le côté 3 , un côté plat 5 parallèle au premier côté plat 3 et un côté plat incliné 6 faisant un angle obtus avec le côté plat 5.

Cette ondulation de la feuille 1 définit avec les feuilles planes 2 adjacentes avec lesquelles la feuille 1 est assemblée deux canaux 7 et 8 qui sont rectilignes.

Les crêtes de chaque ondulation présentent des crénelures 9 de forme trapézoïdale.

Chaque crénelure 9 comprend un côté plat 11 parallèle aux côtés plats 3 ou 5 et bordé par deux côtés plats inclinés 12 et 13, faisant un angle obtus avec le côté plat 11. Ces crénelures s'étendent sur toute la longueur de chaque crête. Chaque crénelure 9 fait communiquer deux canaux tels que 7 ou deux canaux tels que 8, c'est à dire deux canaux disposés d'un même côté de la feuille 1.

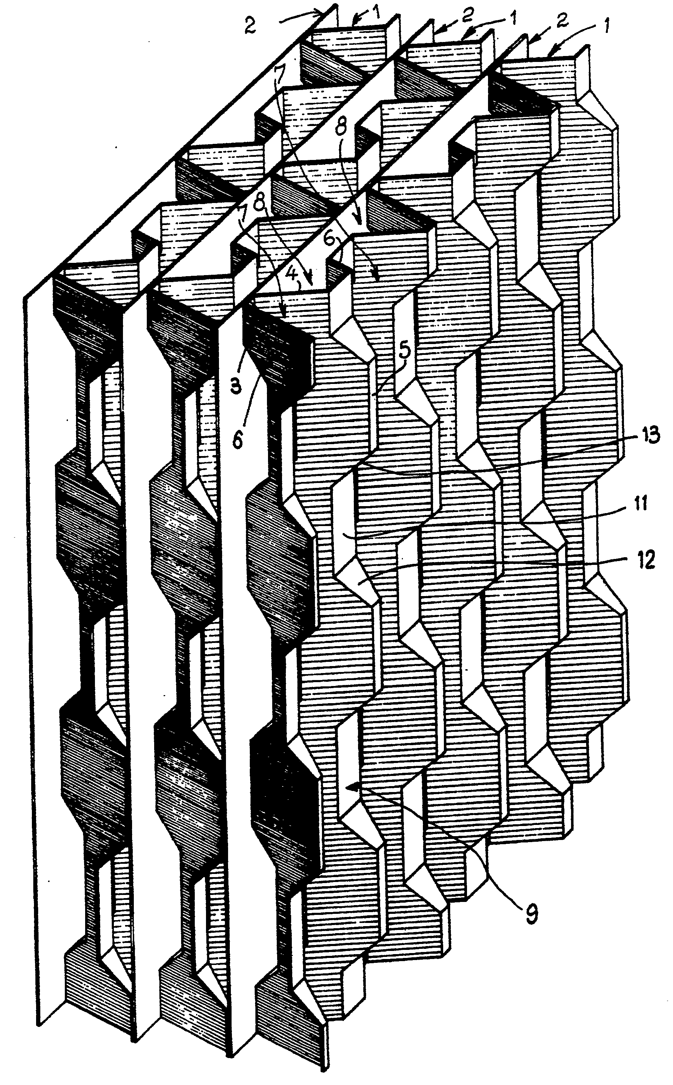

Les crénelures 9 sont disposées de telle façon sur les crêtes de deux ondulations adjacentes qu'elles sont décalées l'une par rapport à l'autre suivant la direction verticale des ondulations comme illustré sur le dessin et forment un motif en quinconce.

Le dispositif de garnissage est disposé dans l'enceinte d'épuration sur un support à mailles de façon à être vertical, c'est à dire de façon que les canaux 7 et 8 soient verticaux.

L'eau à traiter est dispersée à la partie supérieure du dispositif de garnissage et s'écoule verti calement sur les feuilles délimitant les canaux. Sur ces feuilles les déchets sont mis en contact avec d'une part les microorganismes épurateurs et d'autre part l'air qui circule de bas en haut.

Comme on peut le concevoir aisément un tel dispositif permet de réduire au minimum les risques de bouchage. Il présente en outre les avantages supplémentaires suivants :
- La hauteur du dispositif de garnissage peut être adapté à l'installation. On évite ainsi les problèmes liés à l'empilage d'éléments les uns sur les autres. D'ailleurs si une obstruction se produisait la constitution même des canaux permettrait un nettoyage aisé.
- Le dispositif peut être fabriqué sur place. On diminue ainsi considérablement le coût du transport par rapport aux dispositifs qui sont montés en usine et constituent des volumes très importants à transporter.
- L'épaisseur du dispositif peut être réglée en fonction de l'installation. Il n'est donc pas nécessaire de réunir plusieurs éléments, par exemple, par cerclage.
- La hauteur du dispositif peut être réglée en fonction de l'installation. Il suffit de couper les feuilles à la dimension souhaitée.

**Revendications**

1. Dispositif de garnissage pour installation de traitement biologique des eaux résiduaires, du type comprenant un assemblage de feuilles (1) présentant des ondulations et séparées par des feuilles planes (2), lesdites feuilles (1) présentant des ondulations définissant avec les feuilles planes (2) des canaux (7, 8) rectilignes parallèles de ruissellement des eaux résiduaires, caractérisé en ce que les crêtes des ondulations présentent des crénelures (9) délimitant avec la feuille plane (2) adjacente des passages faisant communiquer deux canaux (7, 7 ou 8, 8) disposés d'un même côté d'une feuille ondulée (1), et les crénelures (9) des crêtes de deux ondulations adjacentes sont décalées l'une par rapport à l'autre suivant la direction des ondulations, le décolage étant tel que, dans la direction perpendiculaire aux ondulations, les crénelures et les parties non crénelées de chaque crête font face respectivement aux parties non crénelées et aux crènelures des crêtes des ondulations immédiatement adjacentes.

2. Dispositif selon la revendication 1, caractérisé en ce que le décalage est tel que les crénelures forment un motif en quinconce.

3. Dispositif selon l'une quelconque des revendications 1 à 2, caractérisé en ce que le profil des ondulations est trapézoïdal.

4. Dispositif selon l'une quelconque des revendications 1 à 3, caractérisé en ce que le profil des crénelures (9) est trapézoïdal.

5. Dispositif selon l'une quelconque des revendications 1 à 4, caractérisé en ce que la partie inférieure du dispositif est déporvue de feuilles planes (2) de séparation.

6. Dispositif selon l'une quelconque des revendications 1 à 5, caractérisé en ce que les feuilles (1, 2) sont soudées ou collées.

7. Dispositif suivant l'une quelconque des revendications 1 à 6, caractérisé en ce que les feuilles ondulées (1) et planes (2) comportent des ondulations supplémentaires ou gauffrages de faibles dimensions.

**Patentansprüche**

1. Vorrichtung zum Auskleiden für Anlagen zur biologischen Klärung von Abwasser des Typs, der eine Anordnung von Bögen (1) umfaßt, die durch ebene Bögen (2) getrennt sind, wobei die Bögen (1) Wellen aufweisen, die mit den ebenen Bögen (2) geradlinige, parallele Abwasserströmungskanäle (7, 8) definieren, dadurch gekennzeichnet, daß die Kämme der Wellen Einkerbungen (9) aufweisen, die mit dem benachbarten planaren Bogen (2) Durchgänge umgrenzen, welche zwei Kanäle (7, 7 oder 8, 8), die auf derselben Seite des gewellten Bogens (1) angeordnet sind, miteinander in Verbindung stehen lassen, und die Einkerbungen (9) der Kämme zweier benachbarter Wellen in Richtung der Wellen gegeneinander verschoben sind, wobei die Verschiebung dergestalt ist, daß in der zu den Wellen senkrechten Richtung die Einkerbungen und die nicht eingekerbten Teile jedes Kammes den nicht eingekerbten Teilen beziehungsweise den Einkerbungen der Kämme der unmittelbar benachbarten Wellen gegenüberliegen.

2. Vorrichtung nach Anspruch 1, dadurch gekennzeichnet, daß die Verschiebung dergestalt ist, daß die Einkerbungen ein Muster nach Art der Fünf auf dem Würfel bilden.

3. Vorrichtung nach einem der Ansprüche 1 oder 2, dadurch gekennzeichnet, daß der Querschnitt der Wellen trapezförmig ist.

4. Vorrichtung nach einem der Ansprüche 1 bis 3, dadurch gekennzeichnet, daß der Querschnitt der Einkerbungen (9) trapezförmig ist.

5. Vorrichtung nach einem der Ansprüche 1 bis 4, dadurch gekennzeichnet, daß der untere Teil der Vorrichtung ohne ebene Trennbögen (2) ist.

6. Vorrichtung nach einem der Ansprüche 1 bis 5, dadurch gekennzeichnet, daß die Bögen (1, 2) verschweißt oder verklebt sind.

7. Vorrichtung nach einem der Ansprüche 1 bis 6, dadurch gekennzeichnet, daß die gewellten (1) und ebenen Bögen (2) zusätzliche Wellen oder Prägungen geringer Abmessungen aufweisen.

## Claims

1. Packing device for an installation for the biological treatment of waste water, of the type comprising an assembly of sheets (1) having corrugations and separated by flat sheets (2), said corrugated sheets (1) defining, in conjunction with the flat sheets (2), parallel straight channels (7, 8) for the flow of the waste water, characterised in that the crests of the corrugations have crenellations (9) which define, together with the adjacent flat sheet (2), passages providing communication between two channels (7, 7 or 8, 8) located on the same side or a corrugated sheet (1), and the crenellations (9) on the crests of two adjacent corrugations are offset relative to one another in the direction of the corrugations, the offsetting being such that, in the direction perpendicular to the corrugations, the crenellations and the non-crenellated parts of each crest are located respectively opposite the non-crenellated parts and the crenellations on the crests of the immediately adjacent corrugations.

2. Device according to claim 1, characterised in that the offsetting is such that the crenellations form a staggered pattern.

3. Device according to one of claims 1 to 2, characterised in that the profile of the corrugations is trapezoidal.

4. Device according to any one of claims 1 to 3, characterised in that the profile of the crenellations (9) is trapezoidal.

5. Device according to any one of claims 1 to 4, characterised in that there are no flat separating sheets (2) in the lower part of the device.

6. Device according to any one of claims 1 to 5, characterised in that the sheets (1, 2) are welded or adhesively bonded.

7. Device according to any one of claims 1 to 6, characterised in that the corrugated sheets (1) and flat sheets (2) comprise additional corrugations or embossing of small dimensions.